# EUROPÄISCHE PATENTANMELDUNG

(11) **EP 4 328 353 A2**
(43) Veröffentlichungstag der Anmeldung: **28.02.2024**
(21) Anmeldenummer: 23192147.9
(22) Anmeldetag: 18.08.2023
(51) Int. Cl.: C23C 18/18, C23C 18/54, C25D 5/00, C23C 2/02, C23C 2/08, C23C 2/06, C25D 5/36

(54) **VERFAHREN ZUR VERBESSERTEN VERZINKUNG VON BAUTEILEN IM NORMALVERZINKUNGSPROZESS**

(30) Priorität: 24.08.2022 DE 102022121441
(71) Anmelder: Seppeler Holding und Verwaltungs GmbH & Co. KG, 33397 Rietberg (DE)
(72) Erfinder:
(74) Vertreter: Horak, Michael

(57) **Zusammenfassung**

Die vorliegende Erfindung betrifft ein Verfahren und eine Vorrichtung zur verbesserten Verzinkung von metallischen eisenhaltigen Bauteilen innerhalb der Feuerverzinkung, wobei mindestens ein Bauteil vor der Verzinkung in einem Verzinkungsbad mindestens einer Vorbehandlung mit Zinn und/oder einer Zinnverbindung unterworfen wird, wobei eine Zinnschicht auf dem Bauteil abgelagert wird.

## Beschreibung

### Kurzdarstellung der Erfindung

Die vorliegende Erfindung betrifft ein Verfahren sowie dessen Verwendung zur verbesserten Verzinkung von metallischen Bauteilen, sowie ein hiermit hergestelltes Bauteil, in der Normalverzinkung nach DIN EN ISO 1461.

Verfahren zur Verzinkung sollen im Ergebnis störfreie und glatte Oberfläche generieren, wobei eine möglichst geringe Dicke der Verzinkungsschicht auf den metallischen Bauteilen erzeugt wird.

Das erfindungsgemäße Verfahren wird dabei insbesondere in der Stückverzinkung eingesetzt, bei welcher die metallischen Bauteile in Bädern, im sogenannten Tauchverfahren, behandelt werden und diese somit eine Oberflächenbehandlung erfahren. Bei einem solchen Tauchverfahren wird von der diskontinuierlichen Stückverzinkung, Feuerverzinkung bzw. Schmelztauchverzinkung gesprochen, wobei die Begriffe im Folgenden austauschbar verwendet werden.

Bei der diskontinuierlichen Stückverzinkung, welche nach der DIN EN ISO 1461 Norm geregelt ist, wird mithilfe eines Schmelzbades umfassend ≥ 98,0 Gew.% Zink (Zn) und weiterer Begleitelemente ein Korrosionsschutz generiert, der auf der aufgebrachten gleichmäßigen Schichtdicke des Zinks basiert. In einigen Fällen kann diese Schichtdicke durchschnittlich mehrere 100 µm (Mikrometer) dick sein. Bekannte Verfahren der Stückverzinkung umfassen hierbei eine chemische Vorbehandlung im Entfettungsbad, Beizbad (Beize) und Flussmittelbad (Flux) mit dazwischenliegenden optionalen Spülbädern, wobei die Bauteiloberflächen in den einzelnen Bädern von artfremden Stoffen gereinigt und/oder vorbehandelt werden. Die dazwischenliegenden Spülbäder haben die Aufgabe ein Verschleppen von Chemikalien aus dem jeweiligen Behandlungsbad in den nächsten Prozessschritt zu vermeiden bzw. zu reduzieren. Im Anschluss erfolgt nach einer Lufttrocknung oder der Behandlung in einem Trockenofen (80°C bis 120°C) die Aufbringung einer Zinkoberfläche, bei der das Bauteil in ein Zinkbad mit flüssigem Zink (≥ 98,0 Gew.% Zink (Zn); Temperatur von 440 bis 460°C) getaucht wird. In der anschließenden Freibewitterung reagiert die auf dem Bauteil aufgebrachte Zinkoberfläche mit den Bestandteilen der Umgebungsluft und bildet eine schützende Deckschicht, die Zinkkarbonatschicht (ZnCOs), aus.

In der Feuerverzinkung sind einige Verfahren bekannt in denen die Oberflächenvorbereitung zur Erzeugung eines einheitlichen Zinküberzuges auf dem metallischen Bauteil durch eine verbesserte Reihenfolge von Verfahrensschritten und/oder der Flussmittelzusammensetzung erreicht werden soll. Bei der Flussmittelbehandlung, auch Fluxen genannt, wird die entfettete und gebeizte Oberfläche des Bauteils mit einem sogenannten Flussmittel behandelt, welches im Stand der Technik aus einer wässrigen Lösung im Wesentlichen aus Zinkchlorid (ZnCl₂) und Ammoniumchlorid (NH₄Cl) besteht, mit einer Konzentration von 60 bis 90 Gew.-% Zinkchlorid und 10 bis 40 Gew.-% Ammoniumchlorid.

Obwohl den Anmeldungen aus dem Stand der Technik eine Vielzahl von möglichen Komponenten, Konzentrationen, Verfahrensschritten, Zusammensetzungen und/oder Konditionen entnommen werden kann, ist die Überprüfung der verschiedenen Kombinationen der Auflistungen nur mit erheblichem Aufwand verbunden. Darüber hinaus werden in der Regel keine einwandfreien Oberflächen durch die bekannten Verfahrensschritte und Badzusammensetzungen hervorgebracht, d.h. ohne Unregelmäßigkeiten. Dies gilt insbesondere für dreidimensionale, komplexere Bauteile/Bauteilgruppen sowie Schweißkonstruktionen.

Folglich ist der Nachteil der bekannten Verfahren, dass insbesondere bei komplexeren Bauteilen keine gleichmäßige Verzinkung der Bauteiloberfläche generiert wird und die Bauteiloberfläche nach der Verzinkung in vielen Fällen Pickel, Schlieren, Schalen, Schuppen, Fehlstellen und/oder andere Unregelmäßigkeiten aufweist. Darüber hinaus ist die Verwendung der Zinkchloridkomponente, die innerhalb des Flussmittels verwendet wird, aus umwelttechnischen als auch störfallrelevanten Aspekten bedenklich.

Die Aufgabe der vorliegenden Erfindung ist daher ein Verfahren zur Verfügung zu stellen, welches eine einwandfreie Verzinkungsoberfläche auf den metallischen Bauteilen in der Normalschmelze, d.h. der konventionellen Feuerverzinkung mit Rein- bzw. Feinzink, generiert. Darüber hinaus soll der Einsatz von verschiedenen Chemikalien weitestgehend reduziert werden, um die Exposition umweltkritischer Stoffe zu vermeiden.

Die vorliegende Erfindung betrifft daher ein Verfahren sowie dessen Verwendung zur verbesserten Stückverzinkung nach DIN EN ISO 1461 von metallischen Bauteilen, insbesondere eisenbasierten Bauteilen, wobei eine Bauteiloberfläche ohne Unregelmäßigkeiten generiert wird, wobei mindestens ein Bauteil vor einer Verzinkung in einem Verzinkungsbad mindestens einer Vorbehandlung mit Zinn und/oder einer Zinnverbindung unterworfen wird, bei welcher eine Zinnschicht auf dem Bauteil abgelagert wird. In einem Aspekt der Erfindung erfolgt die Ablagerung der Zinnschicht auf das mindestens eine Bauteil durch (a) mindestens eine Behandlung in einem Vorbehandlungsbad bestehend aus Zinnchlorid (SnCl₂); (b) Schmelztauchen in einem schmelzflüssigem Zinnbad, (c) Aufsprühen von Zinn oder einer Zinn-Verbindung auf die Bauteiloberfläche, und/oder (d) galvanische Verzinnung. Im Falle der Behandlung im Vorbehandlungsbad, bestehend aus Zinnchlorid (SnCl₂), weist die Vorbehandlungsflüssigkeit vorzugsweise eine wässrige Lösung von Zinnchlorid (SnCl₂) mit einer Konzentration von 0,10 g/l Sn bis zu 100 g/l Sn, vorzugsweise 5 bis 20 g/l Sn, und einen pH-Wert von ≤ 0,50, vorzugsweise von ≤ 0,30, auf. Die Verweilzeit in dem Vorbehandlungsbad beträgt in einer Ausführungsform zwischen 1 min bis 30 min, vorzugsweise zwischen 5 min und 25 min, besonders bevorzugt zwischen 10 min bis 20 min, sodass die Oberfläche des Bauteils annährend vollständig mit der Zinn-Ablagerung bedeckt wird. Die Temperatur des Bades liegt zwischen 30°C und 60°C, vorzugsweise zwischen 40°C und 50°C, besonders bevorzugt bei 45°C.

In einer Ausführungsform der vorliegenden Erfindung kann zusammen oder der Zinnvorbehandlung nachgeschaltet das Bauteil mit Ammoniumchlorid (NH₄Cl) behandelt werden.

Vor der Behandlung mit Zinn oder einer Zinnverbindung wird das Bauteil in einem Aspekt der Erfindung von Fetten, Ölen und/oder Ablagerungen gesäubert, wobei den Schritten der Entfettung und Beize vorzugsweise mindestens ein Spülschritt zwischengeschaltet und/oder nachgeschaltet ist.

Vor der Zinkschmelze kann ferner vorgesehen sein, dass das Bauteil nach der Behandlung mit Zinn oder einer Zinnverbindung mittels eines oder mehrerer Spülvorgänge gereinigt und/oder getrocknet wird, vorzugsweise für ≥ 30 min luftgetrocknet oder ≥ 10 min im beheizten Trockenofen.

Bei dem erfindungsgemäßen Verfahren bildet die Zinnschicht, die auf dem Bauteil abgelagert wurde, in einem Aspekt eine Diffusionsbarriere zwischen der Zeta- und der Eta-Phase beim Verzinkungsprozess, wodurch die Gesamtschichtdicke der Verzinkungsschicht besonders bei reaktiven Stählen (Sebisty- u. Hoch-Silizium-Stähle) reduziert wird.

Darüber hinaus betrifft die vorliegende Erfindung auch eine Vorrichtung zur verbesserten Verzinkung von metallischen eisenhaltigen Bauteilen innerhalb der Feuerverzinkung, umfassend mindestens
a) ein Vorbehandlungsbad bestehend aus wässerigem Zinnchlorid (SnCl₂) mit einer Konzentration von 0,10 g/l Sn bis zu 100 g/l Sn, vorzugsweise 5 bis 20 g/l Sn, und einem pH-Wert von ≤ 0,50, bevorzugt von ≤ 0,30;
b) ein Vorbehandlungsbad in Form eines schmelzflüssiges Zinnbades,
c) ein Vorbehandlungsbad für eine galvanische Verzinnung, und/oder eine
d) Vorrichtung zum Aufsprühen einer Zinnschicht auf die Bauteiloberfläche; durch welche eine Zinnschicht auf mindestens einem Bauteil abgelagert wird.

In einem Aspekt ist dem Vorbehandlungsbad mindestens ein Bad bestehend aus Ammoniumchlorid (NH₄Cl) nachgeschaltet und/oder Ammoniumchlorid (NH₄Cl) ist im Vorbehandlungsbad umfasst.

Darüber hinaus kann in einer weiteren Ausführungsform dem Zinnvorbehandlungsbad mindestens (a) ein Entfettungsbad zur Säuberung des Bauteils von Fetten und/oder Ölen; und/oder (b) eine Beize zur Reinigung von Ablagerungen, wie Rost und Zunder, auf der Bauteiloberfläche vorgeschaltet sein. Ferner ist in einem bevorzugten Aspekt dem Zinnvorbehandlungsbad mindestens ein Spülbad vorgeschaltet und/oder nachgeschaltet.

Die vorliegende Erfindung wird durch die Ausführungsformen in den Ansprüchen gekennzeichnet und durch die Ausführungen in der folgenden Beschreibung, den Beispielen und den Zeichnungen näher beschrieben.

### Beschreibung der Zeichnungen

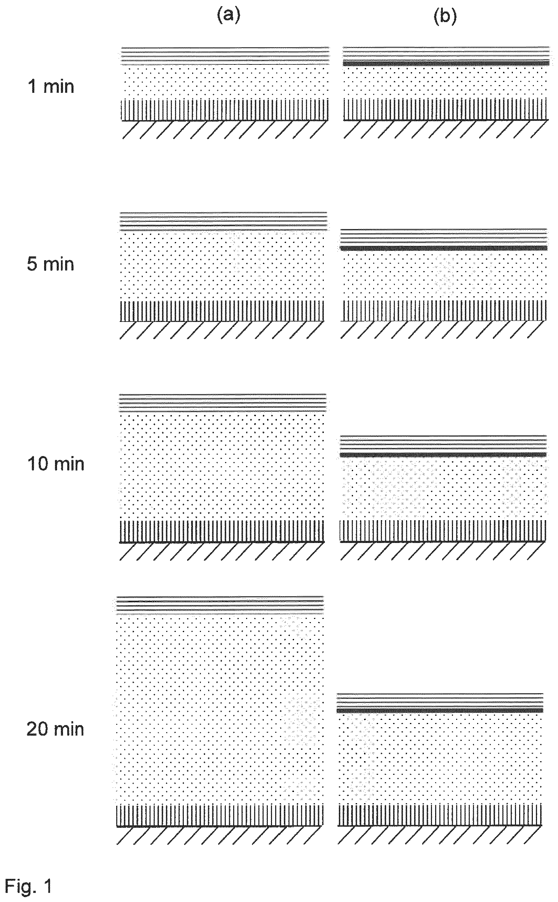

- Fig. 1: Schematische Darstellung des Schichtdickenaufbaus ohne (a) und mit (b) Vorbehandlung mit Zinn. Die Schichtdicke der Zeta-Phase steigt mit zunehmender Verweilzeit in der Zinkschmelze, wobei die Erhöhung bei dem unbehandelten Bauteil (a) stärker ausgeprägt ist. Grundmaterial (schräg gestreift); Delta-Phase (vertikal gestreift); Zeta-Phase (gepunktet); Eta-Phase (quergestreift); Zinnphase (dicker schwarzer Querstrich).

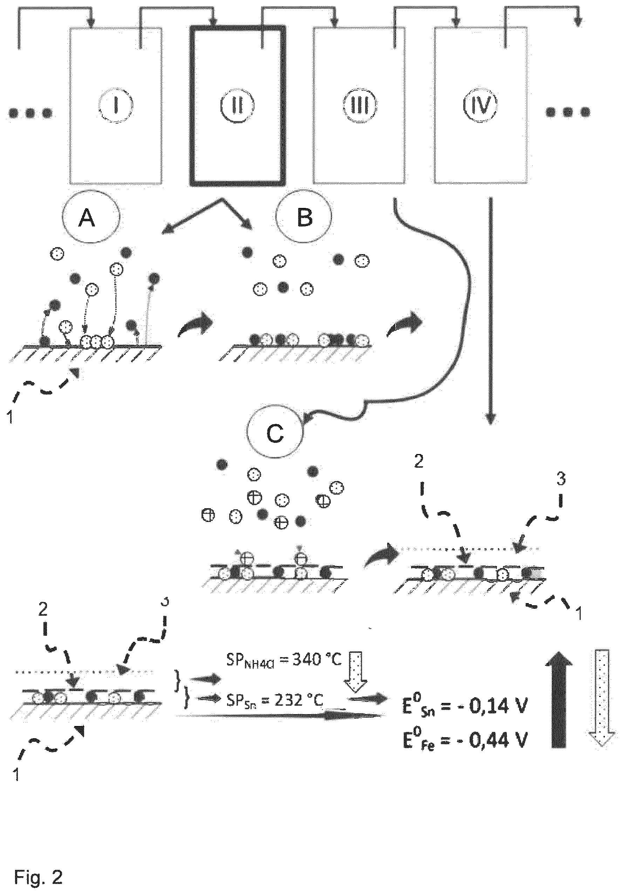

- Fig. 2: Schematische Darstellung eines erfindungsgemäßen Verfahrens mit einem Vorbehandlungsbad, welches eine Zinn(II)-Verbindung aufweist, mit nachfolgendem NH₄Cl-Bad. Spüle (I), Vorbehandlungsbad mit einer Zinn(II)-Verbindung (II), Ammoniumchlorid (NH₄Cl)-Bad (III), Trockenofen (IV); Fe⁰/Fe²⁺ (schwarze Kreise), Sn⁰/Sn²⁺ (gepunktete Kreise); NH₄Cl (karierte Kreise), eisenbasierte Bauteiloberfläche (1), metallisch-abgeschiedene Sn-Schicht (2), aufgetrocknete Salzschicht (3).

### Detaillierte Beschreibung der Erfindung

Die vorliegende Erfindung betrifft ein Verfahren sowie dessen Verwendung zur verbesserten Verzinkung, bei der Stückverzinkung nach DIN EN ISO 1461 von metallischen Bauteilen, insbesondere eisenhaltigen Bauteilen, wobei eine Bauteiloberfläche ohne Unregelmäßigkeiten generiert wird.

Im Folgenden sollten die Artikel "ein" und alle Ableitungen hiervon, wie sie hier verwendet werden, generell als "ein/e/es oder mehrere" verstanden werden, sofern nicht anderweitig angegeben oder aus dem Kontext als Singularform ersichtlich ist.

Sofern die Begriffe "enthält", "hat", "besitzt" und dergleichen in der Beschreibung oder den Ansprüchen verwendet werden, sollen diese Begriffe derart verstanden werden, wie der Begriff "aufweisend" oder "umfassend", d.h. nicht abschließend, außer es ist explizit angegeben.

Die im Folgenden verwendete Begriffe "Bad" oder "Bäder" bezeichnen im allgemeinen Becken, die mit Flüssigkeit, vorzugsweise Prozessflüssigkeit, gefüllt werden können und in welche mindestens ein Bauteil eingelassen werden kann. Aus diesem Grund handelt es sich zumeist um nach oben hin offene Becken oder Bäder. Zwar wird grundsätzlich von mehreren Bädern gesprochen, es kann sich jedoch auch um ein Becken oder Bad handeln, dass in einzelne Abschnitte getrennt ist, die die jeweilige Prozessflüssigkeit umfassen. In einem solchen Fall würden die einzelnen Abschnitte jeweils einem Bad entsprechen.

Bei dem Begriff "Bauteil(e)" handelt es sich um metallische Bauteile jeglicher Art, vorzugsweise Bauteile aus eisenhaltigem bzw. eisenbasierten Material, insbesondere Bauteile aus Stahl, wie Rohlinge, Teilstücke, Konstruktionen und/oder fertige Werkstücke. Der Begriff "Bauteil" umfasst im Folgenden auch Gruppierungen und/oder Zusammenstellungen von Bauteilen unterschiedlicher oder gleicher Art und/oder unterschiedlichem oder gleichem Material, die eine gemeinsame Behandlung in einem oder mehreren Prozessbädern und/oder Schritten durchlaufen können. Diese Gruppierungen können in einigen Fällen auch mithilfe geeigneter Hilfsmittel, wie Traversen, Warenträgern oder ähnlicher Vorrichtungen zusammengestellt werden.

Die Begriffe "Vorbehandlung", "Vorbehandlungsflüssigkeit" oder "Vorbehandlungsmittel" umfassen alle Prozesse, die das Bauteil vor der Behandlung im Zinkbad durchläuft, oder Zusammensetzungen, die für die Vorbehandlung des Bauteils vor der Zinkschmelze verwendet werden.

Der Begriff "Ablagerung" umfasst in der hiesigen Beschreibung alle Ablagerungen, Abscheidungen, Schichtbildungen, Absonderungen, Fällungsreaktionen und ähnliche Reaktionen auf der Bauteiloberfläche. Insbesondere handelt es sich bei Ablagerungen in der vorliegenden Erfindung um metallische Abscheidungen aufgrund von Redoxreaktionen, basierend auf den Standardpotentialunterschieden der Einzelelemente in der chemischen Spannungsreihe der Elemente, auf der Bauteiloberfläche.

Das folgende Verfahren ist auf eine Vorbehandlung in einer "Normalschmelze" gerichtet, d.h. einer Stückverzinkung nach DIN EN ISO 1461, die auch als konventionelle Feuerverzinkung bezeichnet wird, bei der eine Verzinkung mit Rein- bzw. Feinzink erfolgt.

Vorläufige Versuchsergebnisse zeigten erstaunlicherweise, dass eine übliche Flussmittelzusammensetzung, die aus mindestens einer wässrigen Lösung aus Zinkchlorid (ZnCl₂) und Ammoniumchlorid (NH₄Cl) besteht, nicht notwendig ist, um eine einwandfreie Oberflächenbeschichtung durch die Schmelze zu erlangen. Auch weitere Komponenten innerhalb der Flussmittelzusammensetzung sind für eine verbesserte Oberflächenbeschichtung nicht notwendig und sogar störend.

Daher betrifft die vorliegende Erfindung ein Verfahren zur Vorbehandlung von metallischen, insbesondere eisenhaltigen Bauteilen, vor der Normalschmelze, mit einer Zinn-Verbindung, insbesondere Zinnchlorid (SnCl₂) oder durch eine (galvanische) Verzinnung der Bauteiloberfläche.

Wie bei den bekannten Verfahren kann die Oberfläche vor der Zinnbehandlung vorab von Fetten und Ölen in der Entfettung befreit sowie gebeizt werden, um Ablagerungen wie Rost und/oder Zunder zu entfernen. Um Verschleppungen von Chemikalien zwischen den einzelnen Bädern zu vermeiden, können zwischen den einzelnen Schritten auch ein oder mehrere Spülbäder vorgeschaltet, zwischengeschaltet und/oder nachgeschaltet sein. Dieses vorgereinigte Bauteil wird sodann weiter behandelt.

Im Anschluss wird die Oberfläche sodann (a) galvanisch verzinnt, sodass eine Ablagerung von Zinn auf der Bauteiloberfläche erfolgt; (b) in ein Zinn-Verbindungsbad getaucht und/oder mit einer Zinn-Verbindung benetzt; (c) in ein Bad umfassend eine Zinn-Verbindung und mindestens eine weitere Verbindung getaucht; (d) mit Zinn und/oder einer Zinn-Verbindung besprüht; und/oder (e) in ein schmelzflüssiges Bad aus Zinn getaucht (Schmelztauchen). Allen Möglichkeiten gemeinsam ist, dass vor der Verzinkung eine metallische Zinn-Abscheidung auf der Bauteiloberfläche aufgetragen wird, die sich positiv auf das nachfolgende Verzinkungsergebnis in der Zinkschmelze auswirkt.

Bei der Möglichkeit (a) der galvanischen Verzinnung wurden die Bauteile nach ein oder mehreren Reinigungen, Spülungen und Beizvorgängen in einen Zinnelektrolyt eingetaucht und eine elektrische Spannung angelegt. Durch Letztere schied sich auf der Bauteiloberfläche Zinn ab. Der Vorteil der galvanischen Verzinnung im Vergleich zu dem Schmelztauchen, d.h. der Möglichkeit (e) bei der das Bauteil in ein Zinnbad getaucht wird, ist, dass mit der galvanischen Verzinnung sehr dünne Schichten von wenigen Mikrometern (µm) sich auf der Bauteiloberfläche realisieren lassen.

Bei der Möglichkeit (b) wird das Bauteil nach möglichen Reinigungs-, Spül-, und Beizschritten in ein wässriges Zinn-Verbindungsbad getaucht und/oder mit einer Zinn-Verbindung benetzt. Das Bad besteht hierbei lediglich aus der Zinnkomponente, vorzugsweise Zinnchlorid (SnCl₂). Das Zinn-Verbindungsbad oder die Vorbehandlungsflüssigkeit weist insbesondere eine Konzentration von 0,10 g/l Sn bis zu 100 g/l Sn, besonders bevorzugt 5-20 g/l Sn auf und einen pH-Wert von ≤ 0,50, vorzugsweise von ≤ 0,30. Die Verweilzeit in einem Zinn-Verbindungsbad beträgt zwischen 1 min bis 30 min, vorzugsweise zwischen 5 min und 25 min, besonders bevorzugt von 10 min bis 20 min, sodass die Oberfläche des Bauteils annährend vollständig mit der Zinn-Ablagerung bedeckt ist. Die Temperatur des Bades betrug in Versuchen ferner zwischen 30°C und 60°C, vorzugsweise zwischen 40°C und 50°C, besonders bevorzugt 45°C.

Alternativ zu den vorherigen Methoden kann auch, wie in Möglichkeit (d) dargestellt, eine Zinn-Verbindung oder Zinn auf die Bauteiloberfläche gesprüht werden, sodass sich eine Ablagerungsschicht an Zinn auf der Bauteiloberfläche bildet.

Grundsätzlich zeigen die durchgeführten Versuchsergebnisse, dass keine weitere Behandlung mit einem Flussmittel, anderweitigen Bad oder Stoff zusätzlich notwendig war, da bereits signifikante Schichtdickenreduzierungen der Zinkschicht nach alleiniger Behandlung der Bauteiloberfläche mit einer Zinn-Verbindung bzw. einer Verzinnung zu beobachten waren. Darüber hinaus wiesen die Bauteilproben eine gleichmäßige Oberflächenstruktur auf, auf der keine Pickel, Unregelmäßigkeiten oder andere Störungen sichtbar waren. In diesem Zusammenhang betrifft die Erfindung in einem Aspekt der Erfindung eine Vorbehandlung eines Bauteils direkt vor der Zinkschmelze mit einer Zinnverbindung und/oder mittels (galvanischen) Verzinnung.

Die Vorbehandlung des Bauteils mit Zinn (Sn)-Verbindungen basiert auf einer Sudabscheidung, einem lonenaustauschverfahren, das auf einer Redoxreaktion beruht. Hierbei werden Elektronen von einem unedleren Metall (Reduktionsmittel) an ein edleres Metall (Oxidationsmittel) abgegeben, wobei sich das Maß der Bereitschaft der Elektronenaufnahme bzw. Elektronenabgabe nach dem Redoxpotential der entsprechenden Metalle richtet.

Im vorliegenden Verfahren wird das vorgereinigte Bauteil, welches in der Regel aus Eisen bzw. Stahl besteht, mit mindestens einer Prozessflüssigkeit behandelt, die eine Zinn (Sn)-Verbindung umfasst oder Zinn ist. Folglich liegt eine Standardpotentialdifferenz von ungefähr 0,30 V zwischen dem Eisen der Bauteiloberfläche und dem Zinn vor. Durch die relativ geringe Differenz zwischen den beiden Stoffen Eisen und Zinn erfolgt eine langsame und gleichmäßige Abscheidung von Zinn auf der Bauteiloberfläche, die die Oberfläche nahezu komplett bedeckt. Das Bauteil, welches in der Regel eisenbasiert ist, hat ein geringeres Redoxpotential im Vergleich zur Zinn(II)-haltigen Prozessflüssigkeit und fungiert daher als Reduktionsmittel, welches Elektronen an die Zinn(II)-Verbindung (Oxidationsmittel) abgibt. Entsprechend geht an der Bauteiloberfläche das elementare Eisen (E⁰ = -0,44 V) im sauren Medium in seine oxidierte 2-wertige Form über und in Lösung (Fe²⁺). Das in der Prozesslösung edlere (E⁰ = - 0,14 V) und 2-wertig vorliegende Zinn (hier Sn²⁺), nimmt hingegen die abgeschiedenen Elektronen des Eisens auf und geht in seine elementare Form über und scheidet sich metallisch an der Bauteiloberfläche ab.

Die Abscheidung von Zinn auf der Bauteiloberfläche kann durch die Zinn(II)-Konzentration und/oder die Verweilzeit des Bauteils in der Prozessflüssigkeit gesteigert werden, wodurch eine zusammenhängendere Abscheidung von Zinn auf der Bauteiloberfläche erreicht werden kann, die zu einer qualitativ besseren Zinkbeschichtung sowie einer Schichtdickenreduzierung führt.

Anders als in den üblichen bekannten Verfahren wird das Bauteil nicht mit einem Flussmittel innerhalb eines Flussmittelbads behandelt, welches mindestens die beiden Komponenten Zinkchlorid (ZnCl₂) und Ammoniumchlorid (NH₄Cl) umfasst. Auch andere Komponenten der üblichen Flussmittelzusammensetzungen zeigen in ersten Ergebnissen störende Eigenschaften auf die Oberfläche bei der Verzinkung. Neben dem Aspekt der verbesserten Oberfläche, ist die Oberflächenbehandlung mit minimalen Komponenten, nämlich lediglich Zinn bzw. einer Zinnverbindung und optional Ammoniumchlorid umwelttechnisch verträglicher und ermöglicht eine ressourcenschonendere und umweltbewusstere Behandlung von Bauteilen mit hervorragenden Oberflächeneigenschaften.

In einem weiteren Aspekt der vorliegenden Erfindung kann das Zinnbad neben einer Zinn-Verbindung daher auch Ammoniumchlorid (NH₄Cl) aufweisen bzw. das galvanisch verzinnte Bauteil kann mit einer wässerigen Ammoniumchlorid (NH₄Cl)-Lösung behandelt werden. Wie den Versuchen, insbesondere des Beispiels 3 Tab. 3 Nr. 2 zu entnehmen ist, wiesen die Bauteile, welche mit einer Kombination von Zinn und Ammoniumchlorid (NH₄Cl) behandelt wurden, eine noch höhere Reduzierung der Schichtdicke der Verzinkungsschicht nach der Zinkschmelze auf im Vergleich zu den Bauteilen die lediglich mit einer Zinn oder Zinn-Verbindung behandelt wurden. Darüber hinaus war in präliminieren Ergebnissen zu beobachten, dass insbesondere bei komplexeren Bauteilen, d.h. Bauteilen, die eine höhere Komplexität des Bearbeitungszustandes und/oder Geometrie aufwiesen, beispielsweise ein oder mehrere Engräume, Kanten oder andere schwierig erreichbare Stellen, die Verwendung von Zinn bzw. einer Zinnverbindung in Kombination mit einer Ammoniumchloridbehandlung (NH₄Cl), vorzugsweise 10 g/l Sn, 200 g/l NH₄Cl, einem pH-Wert von 0,30, einer Temperatur (T) von 45 °C und einer Verweilzeit (VZ) von 15 Min, erstaunlicherweise die besten Verzinkungsergebnisse lieferten.

Nach der Aufbringung von Zinn auf die Bauteiloberfläche kann vorgesehen sein, dass ein oder mehrere Spülvorgänge durchgeführt werden, um mögliche Verunreinigungen zu entfernern. Jedoch zeigten erste vorläufige Ergebnisse, dass ein Spülgang nach der Behandlung mit Zinn oder einer Zinn-Verbindung nicht notwendig zu sein scheint, da keine Auswirkungen auf die Zinkbeschichtung bei fehlendem Spülgang beobachtet werden konnten.

In einem weiteren Schritt des Verfahrens wird nach der Vorbehandlung mit Zinn oder einer Zinn-Verbindung mit/ohne Ammoniumchlorid (NH₄Cl) das Bauteil getrocknet. Dies erfolgt an der Luft (Lufttrocknung) für über 30 min und/oder im beheizten Trockenofen für über 10 min. Durch den Trocknungsschritt wird erreicht, dass insbesondere auf der Bauteiloberfläche anhaftendes Wasser der wässrigen Lösungen entfernt wird.

Durch die gleichzeitige oder nachgeschaltete Behandlung des Bauteils mit Ammoniumchlorid (NH₄Cl), welche als Salzschicht auf der metallischen Ablagerung aufgebracht ist, wird zunächst ein Feinbeizeffekt bewirkt, der sodann zu einer perfekten Benetzung des Bauteils mit Zink führt.

Die Zinkbeschichtung umfasst in der Regel unterschiedliche Phasen, die abhängig vom Material des Bauteils, insbesondere seines Siliziumgehalts sind. Üblicherweise bilden sich eine Delta-, Zeta- und Eta-Phase (Reinzink bzw. Zusammensetzung der Schmelze) in der Zinkbeschichtung aus. Die Zeta-Phase bildet sich bei einem Bauteil aus einem Sebisty- und/oder Hochsilizium-Stahl vom Bauteil bis zur Deckschicht sehr stark aus, wodurch die gesamte Zinkbeschichtung durch diese relativ dick wird. Das metallische Zinn, welches sich mittels Sudabscheidung auf der Oberfläche des Bauteils in der Vorbehandlung der hiesigen Erfindung absetzt, bildet jedoch eine Diffusionsbarriere zwischen der palisadenförmig ausgebildeten Zeta-Phase und der Eta-Phase, welche das Schichtdickenwachstum der Zeta-Phase hemmt. Die metallisch abgeschiendene Zinnschicht auf der Bauteiloberfläche weist dabei vorzugsweise eine Dicke von ≤ 0,1 µm auf. Wie in der Fig. 1 dargestellt, bildet sich eine Zinn-Eisen-Zink-Phase zwischen der Zeta- und der Eta-Phase aus, wodurch eine verminderte Gesamtschichtdicke erreicht wird im Vergleich zu einer Behandlung ohne Zinn. Folglich können im Gegensatz zu den bekannten Verzinkungen nach DIN EN ISO 1461 (Feuerverzinkung) signifikant dünnere Zinkschichten, gerade bei reaktiven Stählen mit einem Si-Gehalt > 0,14 % Si (Silizium; 0,14-0,25 % Si = Sebisty-Stahl; > 0,25 % Si = Hoch-Silizium-Stahl), ausgebildet werden. Mit den verbesserten Verfahrensabläufen und Zusammensetzungen kann in dem Schmelzbad (Verzinkungsbad) nach DIN EN ISO 1461 bis auf geringe Al-Zugaben in der Größenordnung bis 0,005 Gew.% und/oder Nickel in der Größenordnung bis 0,050 Gew.% (für Sandelin-Stähle = > 0,03 - < 0,14 % Si) auf jegliche weitere Schmelzzusätze verzichtet werden, obwohl ein Bauteil mit einer gleichmäßigen Verzinkungsschicht, die auch möglichen optischen Anforderungen entspricht, mit deutlich geringerer Verzinkungsschicht durch das hiesige Verfahren bereitgestellt wird.

Folglich betrifft die Erfindung neben dem Verfahren zur Vorbehandlung eisenbasierter Bauteile mittels Zinn und/oder einer Zinn-Verbindung in der Normalverzinkung auch ein Bauteil selbst, dass mit einem solchen Verfahren vorbehandelt wurde. Das vorbehandelte Bauteil weist im Gegensatz zu dem Bauteil aus dem Stand der Technik eine signifikant glattere Verzinkungsschicht auf, die wenigere bis keine Unregelmäßigkeiten und im Falle der normalen Feuerverzinkung (Stückverzinkung) nach DIN EN ISO 1461, d.h. dem Feuerverzinken von gefertigten Einzelteilen im diskontinuierlichen Verfahren, eine deutlich verminderte Verzinkungsschicht aufweist.

Darüber hinaus betrifft die vorliegende Erfindung auch eine Vorrichtung umfassend (a) ein Vorbehandlungsbad bestehend aus wässerigem Zinnchlorid (SnCl₂); (b) ein schmelzflüssiges Zinnbad; (c) ein Bad für eine galvanische Verzinnung; und/oder (d) eine Zinn- und/oder Zinnverbindungsaufsprühvorrichtung; durch welche eine Zinnschicht auf mindestens einem Bauteil abgelagert wird. Das Vorbehandlungsbad aus wässrigem Zinnchlorid weist hierbei eine Konzentration von 0,10 g/l Sn bis zu 100 g/l Sn, bevorzugt 5 bis 20 g/l Sn, und einen pH-Wert von ≤ 0,50, bevorzugt von ≤ 0,30 auf.

In einem Aspekt der Erfindung kann dem Vorbehandlungsbad, dem Zinnbad, der galvanischen Verzinkung und/oder der Aufsprühvorrichtung mindestens ein Bad bestehend aus Ammoniumchlorid (NH₄Cl) nachgeschaltet sein. Alternativ oder zusätzlich kann Ammoniumchlorid (NH₄Cl) in den Bädern bzw. der Sprühflüssigkeit umfasst sein.

Die Vorrichtung weist in einem bevorzugten Aspekt der Erfindung mindestens ein Entfettungsbad zur Säuberung des Bauteils von Fetten und/oder Ölen; und/oder eine Beize zur Reinigung von Ablagerungen auf der Bauteiloberfläche auf, die dem Zinnvorbehandlungsbad vorgeschaltet sind. Die Reinigung der Bauteiloberfläche in den entsprechenden Bädern soll eine verbesserte Anlagerung der Zinnschicht auf diesen ermöglichen. Darüber hinaus kann dem Zinnvorbehandlungsbad bzw. den vorgenannten Variationen a-d mindestens ein Spülbad vorgeschaltet und/oder nachgeschaltet sein, sodass wässrige Bestandteile der Bäder und/oder auf der Bauteiloberfläche nicht abgelagertes Zinn vor dem Zinkbad abgewaschen wird. Alternativ oder zusätzlich kann nach dem Zinnvorbehandlungsbad bzw. dem mindestens einen Spülbad und dem darauffolgenden Verzinkungsbad mindestens ein Trockenofen zwischengeschaltet sein, der die Restfeuchte auf der Bauteiloberfläche entfernt.

Diese und andere Ausführungsformen der vorliegenden Erfindung werden in der Beschreibung und den Beispielen offenbart und sind durch diese umfasst. Weitere Literatur über bekannte Materialien, Verfahren und Anwendungen, die in Übereinstimmung mit der vorliegenden Erfindung verwendet werden können, können aus öffentlichen Bibliotheken und Datenbanken, beispielsweise unter Verwendung elektronischer Geräte aufgerufen werden. Ein vollständigeres Verständnis der Erfindung kann durch Bezugnahme auf die folgenden Beispiele erhalten werden, die zum Zweck der Illustration bereitgestellt wurden und den Umfang der Erfindung nicht beschränken sollen.

### Beispiele

### Beispiel 1: Versuche zur Vorbehandlung mit Zinn innerhalb eines Zinnbades in der normalen Feuerverzinkung nach DIN EN ISO 1461

Zum Vergleich der unterschiedlichen Parameter in der Vorbehandlung von eisenbasierten Bauteilen in der Normalschmelze wurden Stahlbleche aus Sebisty-Stahl mit Größe von ca. 5,0 x 5,5 cm (t = 3 mm) und Hochsiliziumgrobbleche mit Größe von ca. 4,0 cm x 4,0 cm (t = 20 mm) und Rost auf der Bauteiloberfläche (im folgenden "Bauteile") verwendet, die in identischen Verfahren entfettet und gebeizt wurden.

Bei der alkalischen Heißentfettung wurden die Bauteile bei 60°C für 10 min behandelt und in der anschließenden Eisen-Beize sodann bei einer Temperatur von 27°C für 60 min gebeizt. Entsprechende Parameter für die Entfettung und die Eisen-Beize können beispielsweise der EP3483304 B1 entnommen werden.

Als Kontrollgruppe wurde immer ein Bauteil verwendet, das in einem Flussmittelbad behandelt wurde mit der folgenden Zusammensetzung:
- 2,0 g/l Eisen(II)-Verbindungen
- 100 g/l ZnCl₂ (Zinkchlorid); und
- 250 g/l NH₄Cl (Ammoniumchlorid)

Ferner wies die Flussmittelzusammensetzung einen pH-Wert von 4 auf.

Bauteile gleicher Bauart wurden in einem wässrigen Vorbehandlungsbad das lediglich eine Zinnverbindung, nämlich Zinnchlorid (SnCl₂) umfasste, behandelt. Die Behandlung erfolgte, wie folgt beschrieben:
Wässriges Zinnbad:
- 100 g/l Zinn (Sn) bzw. 190 g/l Zinnchlorid (SnCl₂)
- pH = 0,15
- T = Raumtemperatur (RT)
- Verweilzeit = 15 min

Im Anschluss an die Lufttrocknung für ≥ 30 min wurden die Bauteile gleichzeitig in einem Zinkbad nach der Feuerverzinkung nach DIN EN ISO 1461 bei 450 °C und einer Tauchdauer von 5 min behandelt. Das Zinkbad wies hierbei die folgenden Parameter auf:
0,098 Gew. % Bi
0,097 Gew. % Sn
0,052 Gew. % Ni
0,0031 Gew.% Al
< 99,75 Gew. % Zn

Die im Zinnbad behandelten Proben wiesen eine ebene Zinkschicht auf, die wenige bis keine Unregelmäßigkeiten in der Auftragung aufwies. In der folgenden Tabelle 1 sind die durchschnittlichen Schichtdicken der Bauteile angegeben, die aus mehreren Messungen gewonnen wurden.

**Tab. 1 Schichtdickenmessung der Verzinkungsschicht nach Vorbehandlung im Zinnbad im Vergleich zu Proben ohne Sn-Behandlung (Kontrollgruppe)**

| Probe | Stahlsorte | Verfahren | Schichtdicke Durchschnitt [µm] | Schichtdicke [%] |
|---|---|---|---|---|
| 1 | Sebisty | Kontrollgruppe | 126,30 | 0 |
| 2 | Sebisty | Zinnbad | 115,20 | -8,79 |
| 3 | Hochsilizium | Kontrollgruppe | 299,00 | 0 |
| 4 | Hochsilizium | Zinnbad | 282,10 | -5,65 |

Im Vergleich zu der Kontrollgruppe wiesen die im wässrigen Zinnbad behandelten Bauteile eine Schichtdickenreduzierung von annährend 10% der Zinkschicht auf.

### Beispiel 2: Versuche zur Vorbehandlung mit Zinn innerhalb eines Zinnbades mit Ammoniumchlorid in der normalen Feuerverzinkung nach DIN EN ISO 1461

Wie im vorherigen Beispiel 1 beschrieben wurden baugleiche Bauteile verwendet, die zuvor in einer alkalischen Heißentfettung und Eisen-Beize behandelt wurden. Ein Bauteil wurde, wie zuvor unter Beispiel 1 beschrieben, als Kontrollgruppe behandelt.

In den Probenversuchen wurden Bauteile aus Sebisty-Stahl und Hochsiliziumstahl in einem wässrigen Vorbehandlungsbad behandelt, das aus einer Zinnverbindung, nämlich Zinnchlorid (SnCl₂), und Ammoniumchlorid (NH₄Cl) bestand. Das Vorbehandlungsbad wies folgende Komponentenzusammensetzung und Eigenschaften auf:
Vorbehandlungsbad:
- 50 g/l Zinn (Sn) oder 95 g/l Zinnchlorid (SnCl₂)
- 250 g/l Ammoniumchlorid (NH₄Cl)
- pH = 0,30
- T = 45°C
- Verweilzeit = 5 min

Im Anschluss an die Lufttrocknung für ≥ 30 min wurden die Bauteile gleichzeitig in einem Zinkbad nach der Feuerverzinkung nach DIN EN ISO 1461 bei 450 °C und einer Tauchdauer von 5 min behandelt. Die Parameter des Zinkbads sind identisch zu denen in Beispiel 1.

Die im Zinnbad behandelten Proben wiesen eine ebene Zinkschicht auf, die wenige bis keine Unregelmäßigkeiten im Auftrag aufzeigte. In der folgenden Tabelle 2 sind die durchschnittlichen Schichtdicken der Bauteile angegeben, die aus mehreren Messungen gewonnen wurden.

**Tab. 2 Schichtdickenmessung der Verzinkungsschicht nach Vorbehandlung im Kombinationsbad einer Zinnverbindung und Ammoniumchlorid**

| Probe | Stahlsorte | Verfahren | Schichtdicke Durchschnitt [µm] | Schichtdicke [%] |
|---|---|---|---|---|
| 1 | Sebisty | Kontrollgruppe | 121,90 | 0 |
| 2 | Sebisty | Vorbehandlungsbad: Zinnverbindung und Ammoniumchlorid | 116,10 | -4,76 |
| 3 | Hochsilizium | Kontrollgruppe | 302,50 | 0 |
| 4 | Hochsilizium | Vorbehandlungsbad: Zinnverbindung und Ammoniumchlorid | 289,40 | -4,33 |

Im Vergleich zu der Kontrollgruppe wiesen die im wässrigen Zinn- und Ammoniumchloridbad behandelten Bauteile eine Schichtdickenreduzierung von annährend 5 % der Zinkschicht auf.

### Beispiel 3: Versuche zur Vorbehandlung eines Bauteils anhand galvanischer Verzinnung und anschließender Feuerverzinkung nach DIN EN ISO 1461

Wie in den vorherigen Beispielen wurden baugleiche Bauteile verwendet, die zuvor in einer alkalischen Heißentfettung und Eisen-Beize behandelt wurden. Ein Bauteil wurde, wie zuvor unter Beispiel 1 beschrieben, als Kontrollgruppe behandelt.

In den Probenversuchen wurden Bauteile aus Sebisty-Stahl in einen Zinnelektrolyt eingetaucht und eine elektrischen Spannung angelegt. Im Ergebnis wurde eine Abscheidung von Zinn auf der Bauteiloberfläche von ca. 15-19 µm generiert. Das galvanisch verzinnte Bauteil wurde sodann verzinkt, wie in den Beispielen 1 und 2 beschrieben oder vor der Verzinkung nochmals in einem wässrigen Ammoniumchloridbad behandelt, das die folgende Zusammensetzung und Eigenschaften aufwies:
Vorbehandlungsbad-Ammoniumchlorid:
- 200 g/l Ammoniumchlorid (NH₄Cl)
- pH = 3,8 und 4,05
- T = 45°C
- Verweilzeit = 60 Sekunden

Im Anschluss an die Lufttrocknung für ≥ 30 min wurden die Bauteile gleichzeitig in einem Zinkbad nach der Feuerverzinkung nach DIN EN ISO 1461 bei 450 °C und einer Tauchdauer von 5 min behandelt. Die Parameter des Zinkbads sind identisch zu denen in Beispiel 1.

Die im Zinnbad behandelten Proben wiesen eine ebene Zinkschicht auf, die wenige bis keine Unregelmäßigkeiten im der Auftragung aufwies. In der folgenden Tabelle 3 sind die durchschnittlichen Schichtdicken der Bauteile angegeben, die aus mehreren Messungen gewonnen wurden.

**Tab. 3 Schichtdickenmessung der Verzinkungsschicht nach galvanischer Verzinnung im Vorbehandlungsprozess und optionaler nachgeschalteter Ammoniumchloridbehandlung**

| Probe | Stahlsorte | Verfahren | Schichtdicke Durchschnitt [µm] | Schichtdicke [%] |
|---|---|---|---|---|
| 1 | Sebisty | Kontrollgruppe | 124,70 | 0 |
| 2 | Sebisty | Galvanische Verzinnung mit nachgeschaltetem Ammoniumchloridbad (pH: 3,8) | 105,40 | -15,48 |
| 3 | Sebisty | Kontrollgruppe | 121,70 | 0 |
| 4 | Sebisty | Galvanische Verzinnung mit nachgeschaltetem | 109,00 | -10,44 |
| | | Ammoniumchloridbad (pH: 4,05) | | |
| 5 | Sebisty | Kontrollgruppe | 130,10 | 0 |
| 6 | Sebisty | Galvanische Verzinnung | 116,00 | -10,84 |

Im Vergleich zu den Kontrollgruppen wiesen die galvanisch verzinnten Baugruppen mit oder ohne nachfolgende Ammoniumchloridbehandlung eine signifikant reduzierte Schichtdicke der Verzinkungsschicht von bis zu 15 % auf.

### Beispiel 4: Zusammenfassung

Erstaunlicherweise wiesen die lediglich in einer wässrigen Zinnchloridlösung oder mit Zinn galvanisierten Baugruppen eine deutliche Reduzierung der Zinkschichtdicke nach der Behandlung im Verzinkungsbad auf. Die galvanische Verzinnung konnte die bereits reduzierten Schichtdicken, die durch ein Bad generiert wurden, das eine Zinn-Verbindung umfasste, weiter senken.

Obwohl eine zusätzliche Vorbehandlung mit Ammoniumchlorid nicht notwendig zu sein scheint, um eine Bauteiloberfläche frei von Unregelmäßigkeiten zu erhalten und die Schichtdicke zu reduzieren, scheint eine zusätzliche Behandlung mit Ammoniumchlorid in einigen Fällen, wie dem Beispiel 3 Tab. 3 Nr. 2 zu entnehmen ist, zu einer weiteren Schichtdickenreduzierung der Zinkschicht zu führen. Darüber hinaus zeigten präliminieren Ergebnissen erstaunlicherweise, bei komplexeren Bauteilen die Verwendung von Zinn bzw. einer Zinnverbindung in Kombination mit einer Ammoniumchloridbehandlung (NH₄Cl), vorzugsweise 10 g/l Sn, 200 g/l NH₄Cl, einem pH-Wert von 0,30, einer Temperatur (T) von 45 °C und einer Verweilzeit (VZ) von 15 Min, sehr gute Verzinkungsergebnisse lieferte im Vergleich zu den anderen Behandlungsvarianten.

Die verringerten Schichtdicken der Zinkschicht sind auf eine durch das Zinn generierte Diffusionsbarriere zurückzuführen, die schematisch in Fig. 1 dargestellt ist. Diese Barriere aus Zinn verhindert, dass sich die Zeta-Phase so stark ausbildet wie bei der Verzinkung ohne Zinn. In Fig. 2 ist das grundsätzliche Prinzip der metallischen Zinnabscheidung (Sudabscheidung), basierend auf der Spannungsdifferenz der Standardpotentiale, bildhaft dargestellt.

## Patentansprüche

1. Verfahren zur verbesserten Verzinkung von metallischen eisenhaltigen Bauteilen innerhalb der Feuerverzinkung, wobei mindestens ein Bauteil vor der Verzinkung in einem Verzinkungsbad mindestens einer Vorbehandlung mit Zinn und/oder einer Zinn-Verbindung unterworfen wird, wobei eine metallische Zinnschicht auf dem Bauteil abgelagert wird.

2. Verfahren nach Anspruch 1, wobei die Ablagerung der Zinnschicht auf das mindestens eine Bauteil durch
a) mindestens eine Behandlung in einem Vorbehandlungsbad bestehend aus Zinnchlorid (SnCl₂);
b) Schmelztauchen in einem schmelzflüssigem Zinnbad,
c) galvanische Verzinnung, und/oder
d) Aufsprühen von Zinn und/oder einer Zinnverbindung
erfolgt.

3. Verfahren nach Anspruch 1 oder 2, wobei die mindestens eine Vorbehandlung mit Zinn und/oder einer Zinn-Verbindung in einem in einem Vorbehandlungsbad erfolgt, wobei die Vorbehandlungsflüssigkeit lediglich eine wässrige Lösung von Zinnchlorid (SnCl₂) mit einer Konzentration von 0,10 g/l Sn bis zu 100 g/l Sn, vorzugsweise 5 bis 20 g/l Sn, und einen pH-Wert von ≤ 0,50, vorzugsweise von ≤ 0,30 und optional Ammoniumchlorid (NH₄Cl), aufweist.

4. Verfahren nach Anspruch 3, wobei die Verweilzeit in dem mindestens einen Vorbehandlungsbad mit einer Zinn-Verbindung zwischen 1 min bis 30 min, vorzugsweise zwischen 5 min und 25 min, besonders bevorzugt von 10 min bis 20 min beträgt, wodurch die Oberfläche des Bauteils annährend vollständig mit der Zinn-Ablagerung bedeckt ist.

5. Verfahren nach Anspruch 3 oder 4, wobei die Temperatur des Vorbehandlungsbades zwischen 30°C und 60°C, vorzugsweise zwischen 40°C und 50°C, besonders bevorzugt bei 45°C, beträgt.

6. Verfahren nach einem der Ansprüche 1 bis 5, wobei zusammen oder der Zinnvorbehandlung nachgeschaltet das Bauteil mit Ammoniumchlorid (NH₄Cl), vorzugsweise 200 g/l Ammoniumchlorid, behandelt wird.

7. Verfahren nach einem der Ansprüche 1 bis 6, wobei das Bauteil
a) vor der Behandlung mit Zinn oder einer Zinnverbindung von Fetten, Ölen und/oder Ablagerungen gesäubert wird, wobei den Schritten der Entfettung und Beize vorzugsweise mindestens ein Spülschritt zwischengeschaltet und/oder nachgeschaltet ist;
b) nach der Behandlung mit Zinn oder einer Zinnverbindung und vor der Zinkschmelze mittels eines oder mehrerer Spülvorgänge gereinigt wird; und/oder
c) vor der Zinkschmelze getrocknet, vorzugsweise für ≥ 10 min, wird.

8. Verfahren nach einem der Ansprüche 1 bis 7, wobei das mindestens eine Bauteil die nacheinander folgenden Schritte durchläuft:
a) Behandlung in mindestens einem Entfettungsbad zur Säuberung von Fetten und/oder Ölen;
b) Beize des Bauteils zur Reinigung von Ablagerungen auf der Bauteiloberfläche;
c) Behandlung in einem Vorbehandlungsbad enthaltend wässriges Zinnchlorid (SnCl₂) und optional zusätzlich Ammoniumchlorid (NH₄Cl) bei einem pH-Wert von 0 bis 0,5;
d) Trocknung des mindestens einen Bauteils; und
e) Verzinkung des Bauteils bei 450 °C in einem Zinkbad, wobei das Zinkbad vorzugsweise folgende Parameter umfasst:
0,098 Gew. % Bi
0,097 Gew. % Sn
0,052 Gew. % Ni
0,0031 Gew.% Al
< 99,75 Gew. % Zn.

9. Verfahren nach Anspruch 8, wobei zwischen den einzelnen Schritten mindestens ein Spülgang umfasst sein kann.

10. Verfahren nach einem der Ansprüche 1 bis 9, wobei die Zinnschicht, die auf dem Bauteil abgelagert wurde, eine Barriere zwischen der Zeta-Phase und der Eta-Phase der Verzinkungsschicht ausbildet, die Schichtdicke der Verzinkungsschicht reduziert.

11. Bauteil hergestellt nach einem der Ansprüche 1 bis 9.

12. Vorrichtung zur verbesserten Verzinkung von metallischen eisenhaltigen Bauteilen innerhalb der Feuerverzinkung, umfassend mindestens
a) ein Vorbehandlungsbad bestehend aus wässerigem Zinnchlorid (SnCl₂) mit einer Konzentration von 0,10 g/l Sn bis zu 100 g/l Sn, vorzugsweise 5 bis 20 g/l Sn, und mit einem pH-Wert von ≤ 0,50, bevorzugt von ≤ 0,30;
b) ein Vorbehandlungsbad bestehend aus einem schmelzflüssigen Zinnbad,
c) ein Vorbehandlungsbad für eine galvanische Verzinnung, und/oder
d) eine Aufsprüheinrichtung für Zinn und/oder eine Zinn-Verbindung durch welche eine Zinnschicht auf mindestens einem Bauteil abgelagert wird.

13. Vorrichtung nach Anspruch 12, wobei dem Vorbehandlungsbad mindestens ein Bad bestehend aus Ammoniumchlorid (NH₄Cl) nachgeschaltet ist und/oder Ammoniumchlorid (NH₄Cl) im Vorbehandlungsbad umfasst ist.

14. Vorrichtung nach Anspruch 12 oder 13, wobei dem Zinnvorbehandlungsbad mindestens
a) ein Entfettungsbad zur Säuberung des Bauteils von Fetten und/oder Ölen; und/oder
b) eine Beize zur Reinigung von Ablagerungen auf der Bauteiloberfläche; vorgeschaltet ist.

15. Vorrichtung nach einem der Ansprüche 12 bis 14, wobei dem Zinnvorbehandlungsbad mindestens ein Spülbad vorgeschaltet und/oder nachgeschaltet ist.
